# EUROPÄISCHE PATENTSCHRIFT

(11) **EP 3 969 516 B1**
(45) Veröffentlichungstag und Bekanntmachung des Hinweises auf die Patenterteilung: **12.10.2022**
(21) Anmeldenummer: 19725152.3
(22) Anmeldetag: 17.05.2019
(51) Int. Cl.: C08L 83/04

(54) **ZU SILICONHARZ-VERBUNDSTOFF VERNETZBARE SILICONZUSAMMENSETZUNG**
SILICONE COMPOSITION THAT CAN BE CROSS-LINKED TO FORM A SILICONE RESIN COMPOSITE MATERIAL
COMPOSITION DE SILICONE POUVANT ÊTRE RÉTICULÉE POUR FORMER UNE MATIÈRE COMPOSITE DE RÉSINE DE SILICONE

(43) Veröffentlichungstag der Anmeldung: 23.03.2022
(73) Patentinhaber: Wacker Chemie AG, 81737 München (DE)
(72) Erfinder: LAMBRECHT, Jens, 84503 Altötting (DE); SANDMEYER, Frank, 84508 Burgkirchen (DE); WINTERER, Markus, 84359 Simbach (DE)
(74) Vertreter: Fritz, Helmut
(86) Internationale Anmeldenummer: PCT/EP2019/062822
(87) Internationale Veröffentlichungsnummer: WO 2020/233774

(56) Entgegenhaltungen:
- DE-A1-102015 200 704

## Beschreibung

Die Erfindung betrifft eine Siliconharzzusammensetzung (S), die Siliconharz (i) mit Wasserstoffresten und olefinisch ungesättigten Kohlenwasserstoffresten aufweist und sowohl pulverförmige Füllstoffe als auch faserförmige Füllstoffe enthält.

Silicone stellen für viele Anwendungen, besonders für viele elektrische Isolieraufgaben Hochleistungswerkstoffe dar. Sie kombinieren ausgezeichnete UV-Beständigkeit, Beständigkeit gegen Wärmebelastung, Wasserabweisung und Hydrolysebeständigkeit. Es gibt praktisch kein organisches Polymer, das diese Kombination von Merkmalen abdecken kann. Als duromere Variante gibt es bereits heute eine Reihe von Siliconharzen, deren Verwendungsfähigkeit in der Isolierteileindustrie jedoch auf Grund ihrer Darreichungsform (keine Fertigprodukte, nicht lösemittelfrei) stark eingeschränkt ist.

Gießfähige oder formbare Siliconharze, die die Kombination einer eher niedrigen viskosität mit attraktiven mechanischen Eigenschaften aufweisen und die Verarbeitung mit vorhandenen Maschinen und Technologien ermöglichen, sind nicht bekannt.

DE102015200704A1 beschreibt die Synthese von gießfähigen Siliconharzen mit Einheiten Si-H und Si-Vinyl, die durch Vernetzung mit sich selbst gehärtet werden können.

Aufgabe der Erfindung war es, gefüllte Siliconharzsysteme zu schaffen, die mit vorhandenen Maschinen und Technologien verarbeitet werden können und nach Aushärtung bessere mechanische Eigenschaften aufweisen.

Gegenstand der Erfindung ist eine Siliconharzzusammensetzung (S), die Siliconharz (i) aus Einheiten der allgemeinen Formeln (Ia), (Ib), (Ic) und (Id) 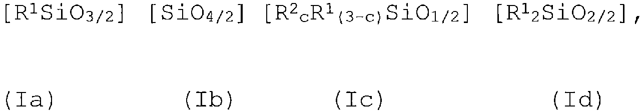 enthält, wobei
- **R¹**: gleiche oder unabhängig voneinander verschiedene einwertige Kohlenwasserstoffreste oder -OH,
- R²: gleiche oder unabhängig voneinander verschiedene einwertige organofunktionelle Kohlenwasserstoffreste, olefinisch ungesättigte Kohlenwasserstoffreste oder einen Wasserstoffrest bedeutet, wobei der Rest **R²** über ein Kohlenstoffatom an das Siliziumatom gebunden ist, und wenn **R²** eine Wasserstoffrest bedeutet, dieser direkt an das Siliziumatom gebunden ist,
- c: die Werte 0 oder 1 bedeuten,
mit den Maßgaben, dass
- mindestens 5 mol-% der Einheiten (Ic) enthalten sind,
- mindestens 20 mol-% der Einheiten (Ia) enthalten sind,
- höchstens 20 mol-% der Einheiten (Ib) enthalten sind,
- höchstens 20 mol-% der Einheiten (Id) enthalten sind,
- mindestens 1 mol-% der Einheiten (Ic) einen Rest **R²** aufweisen, der Wasserstoffrest bedeutet,
- und mindestens 1 mol-% der Einheiten (Ic) einen Rest **R²** aufweisen, der olefinisch ungesättigten Kohlenwasserstoffrest bedeutet,
und sowohl pulverförmige Füllstoffe als auch faserförmige Füllstoffe enthält.

Die Siliconharzzusammensetzung (S) eignet sich besonders gut zur Herstellung von Formteilen, da sie gebrauchsfertig insbesondere 1 komponentig vorliegen kann, eine lange Topfzeit und niedrige viskosität aufweist, lösemittelfrei eingesetzt werden kann, mit vorhandenen Standardmaschinen für Harze verarbeitbar ist und eine besondere Kennzeichnung nicht erforderlich ist. Die Siliconharzzusammensetzung (S) ist zur Selbstvernetzung fähig.

Überraschenderweise verbessern sich die mechanischen Eigenschaften der ausgehärteten Siliconharzzusammensetzung (S), insbesondere die Biegefestigkeiten und Zugfestigkeiten durch die Anwesenheit von sowohl faserförmigen Füllstoffen als auch pulverförmigen Füllstoffen in synergistischer Weise.

Überdies ist die Einarbeitung der faserförmigen Füllstoffe durch die Anwesenheit der pulverförmigen Füllstoffe erleichtert und die Verarbeitbarkeit der Siliconharzzusammensetzung (S) im Vergleich mit rein faserförmigen Füllstoffen enthaltenden Siliconharzzusammensetzungen erheblich verbessert. Letztere weisen eine filzartige Konsistenz auf und können nicht zu Formteilen mit reproduzierbaren Eigenschaften verarbeitet werden.

Das Siliconharz (i) kann hergestellt werden wie beschrieben in DE102015200704A1.

Die Viskosität des Siliconharzes (i) liegt vorzugsweise zwischen 20 und 100 000 mPas, besonders bevorzugt zwischen 30 und 50 000 mPas, ganz besonders bevorzugt zwischen 50 und 10 000 mPas, insbesondere zwischen 100 und 3 000 mPas. Alle Angaben zur viskosität sind bei 25°C und bei Normaldruck von 1013 mbar gültig.

Die Siliconharze (i) sind vorzugsweise solche, die ein Molekulargewicht Mw von mindestens 500, bevorzugt mindestens 600, besonders bevorzugt mindestens 700, insbesondere von mindestens 800 haben, wobei die Polydispersität höchstens 20, bevorzugt höchstens 18, besonders bevorzugt höchstens 16, insbesondere höchstens 15 ist.

Das Siliconharz (i) enthält vorzugsweise mindestens 10 mol-%, besonders bevorzugt mindestens 15 mol-%, ganz besonders bevorzugt mindestens 25 mol-%, insbesondere mindestens 35 mol-% und vorzugsweise höchstens 90 mol-% Einheiten der allgemeinen Formel (Ic).

Das Siliconharz (i) enthält vorzugsweise mindestens 25 mol-%, besonders bevorzugt mindestens 30 mol-%, insbesondere mindestens 35 mol-% und vorzugsweise höchstens 90 mol-% Einheiten der allgemeinen Formel (Ia).

Das Siliconharz (i) enthält vorzugsweise höchstens 15 mol-%, besonders bevorzugt höchstens 10 mol-%, insbesondere höchstens 5 mol-% Einheiten der allgemeinen Formel (Ib).

Das Siliconharz (i) enthält vorzugsweise höchstens 15 mol-%, besonders bevorzugt höchstens 10 mol-%, insbesondere höchstens 5 mol-% Einheiten der allgemeinen Formel (Id).

Vorzugsweise weisen im Siliconharz (i) mindestens 5 mol-%, besonders bevorzugt mindestens 10 mol-%, insbesondere mindestens 15 mol-% der Einheiten der allgemeinen Formel (Ic) einen Rest **R²** auf, der Wasserstoffrest bedeutet.

Vorzugsweise weisen im Siliconharz (i) mindestens 5 mol-%, besonders bevorzugt mindestens 10 mol-%, insbesondere mindestens 15 mol-% der Einheiten der allgemeinen Formel (Ic) einen Rest **R²** auf, der olefinisch ungesättigten Kohlenwasserstoffrest bedeutet.

Vorzugsweise beträgt im Siliconharz (i) in den Einheiten der allgemeinen Formel (Ic) das Verhältnis Rest **R²**, der olefinisch ungesättigten Kohlenwasserstoffrest bedeutet : Rest **R²**, der Wasserstoffrest bedeutet 3:1 bis 1:2, insbesondere 2:1 bis 1:1,1.

Beispiele für organofunktionelle Reste **R²** sind etwa Glykolreste und funktionelle organische Gruppen aus der Gruppe der Phosphorsäureester, Phosphonsäureester, Epoxidfunktionen, Methacrylatfunktionen, Carboxylfunktionen, Acrylatfunktionen, olefinisch oder acetylenisch ungesättigten Kohlenwasserstoffe oder ein hydridischer siliziumgebundener Wasserstoff.

Die jeweiligen funktionellen Gruppen können gegebenenfalls substituiert sein.

Die Reste **R²** können gegebenenfalls hydroxy-, alkyloxy- oder trimethylsilylterminiert sein. In der Hauptkette können nicht benachbarte Kohlenstoffatome durch Sauerstoffatome ersetzt sein.

Die funktionellen Gruppen **R²** bis auf das Wasserstoffatom, das stets siliziumgebunden vorliegt, liegen in der Regel nicht direkt am Siliziumatom gebunden vor. Eine Ausnahme hiervon bilden die olefinischen oder acetylenischen Gruppen, die auch direkt siliziumgebunden vorliegen können, vor allem die Vinylgruppe. Die übrigen funktionellen Gruppen **R²** sind über Spacergruppen an das Siliziumatom gebunden, wobei der Spacer stets Si-C-gebunden vorliegt. Der Spacer ist dabei ein zweiwertiger Kohlenwasserstoffrest, der 1 bis 30 Kohlenstoffatome umfasst und in dem nicht benachbarte Kohlenstoffatome durch Sauerstoffatome ersetzt sein können und der auch andere Heteroatome oder Heteroatomgruppen enthalten kann, wobei dies nicht bevorzugt ist.

Die Methacrylatgruppe, die Acrylatgruppe und die Epoxygruppe sind vorzugsweise über einen Spacer gebunden, wobei der Spacer aus 3 bis 15 Kohlenstoffatome, insbesondere 3 bis 8 Kohlenstoffatome, insbesondere 3 Kohlenstoffatome und gegebenenfalls darüber hinaus höchstens ein bis 3 Sauerstoffatome, vorzugsweise höchstens 1 Sauerstoffatom umfassenden zweiwertigen Kohlenwasserstoffrest an das Siliziumatom gebunden ist.

Die Carboxylgruppe ist vorzugsweise über einen Spacer aus vorzugsweise 3 bis 30 Kohlenstoffatomen, insbesondere 3 bis 20 Kohlenstoffatomen, insbesondere 3 bis 15 Kohlenstoffatomen und ggf. darüber hinaus höchstens ein bis 3 Sauerstoffatomen, vorzugsweise höchstens 1 Sauerstoffatom, insbesondere keinem Sauerstoffatom umfassenden zweiwertigen Kohlenwasserstoffrest, an das Siliziumatom gebunden.

Kohlenwasserstoffreste **R²**, die Heteroatome enthalten, sind beispielsweise Carbonsäurereste der allgemeinen Formel (II)

Y¹ - COOH (II),

wobei **Y¹** vorzugsweise einen zweiwertigen linearen oder verzweigten Kohlenwasserstoffrest bedeutet mit bis zu 30 Kohlenstoffatomen, wobei **Y¹** auch olefinisch ungesättigte Gruppen oder Heteroatome enthalten kann und das vom Rest **Y¹** unmittelbar an das Silizium gebundene Atom ein Kohlenstoff ist. Heteroatome enthaltende Fragmente, die in dem Rest **Y¹** typischerweise enthalten sein können, sind -N(R⁵)-C(=O)-, -C-O-C-, -N(R⁵)-, -C(=O)-, -O-C(=O)-, -C-S-C-, -O-C(=O)-O-, -N(R⁵)-C(=O)-N(R⁵)-, wobei unsymmetrische Reste in beiden möglichen Richtungen in den Rest **Y¹** eingebaut sein können, wobei R⁵ einen Kohlenwasserstoffrest oder Wasserstoff bedeutet.

Wird der Rest gemäß Formel (II) z.B. durch Ringöffnung und Kondensation eines Maleinsäureanhydrids an eine Silanolfunktion erzeugt, so würde er einen Rest der Form (cis)-C=C-COOH bedeuten.

Kohlenwasserstoffreste **R²**, die Heteroatome enthalten, sind außerdem beispielsweise Carbonsäureesterreste der allgemeinen Formel (IX)

Y¹ - C(=O)O-Y² (IX),

wobei **Y¹** die oben angegebene Bedeutung hat. Der Rest **Y²** bedeutet vorzugsweise Kohlenwasserstoffreste und hat dem entsprechend unabhängig von **R¹** vorzugsweise die Bedeutung von **R¹. Y²** kann auch weitere Heteroatome und organische Funktionen enthalten wie Doppelbindungen oder Sauerstoffatome, wobei dies nicht bevorzugt ist.

Der Carbonsäureesterrest **R²** kann auch umgekehrt gebunden vorliegen, also ein Rest der Form Y¹ **-** OC(=O)Y² sein.

Beispiele für weitere organofunktionelle Reste **R²** sind Acryloxy- , bzw. Methacryloxyreste der Methacrylsäureester oder Acrylsäureester wie Methylacrylat, Methylmethacrylat, Ethylacrylat, Ethylmethacrylat, Propylacrylat, Propylmethacrylat, n-Butylacrylat, n-Butylmethacrylat, iso-Butylacrylat, iso-Butylmethacrylat, t-Butylacrylat, t-Butylmethacrylat, 2-Ethylhexylacrylat und Norbornylacrylat. Besonders bevorzugt sind Methylacrylat, Methylmethacrylat, n-Butylacrylat, iso-Butylacrylat, t-Butylacrylat, 2-Ethylhexylacrylat, und Norbornylacrylat.

Beispiele für bevorzugte olefinisch ungesättigte Kohlenwasserstoffreste **R²** sind solche der Formel (XIII) und (XIV)

Y¹-CR⁷=CR⁸R⁹ (XIII)

Y¹-C≡CR¹⁰ (XIV),

wobei **Y¹** die oben angegebene Bedeutung hat und zusätzlich eine chemische Bindung bedeuten kann, was insbesondere in Formel (IX) besonders bevorzugt ist und die Reste **R⁷**, **R⁸**, **R⁹** und **R¹⁰** vorzugsweise ein Wasserstoffatom oder einen C1 - C8 Kohlenwasserstoffrest bedeuten, der gegebenenfalls Heteroatome enthalten kann, wobei das Wasserstoffatom der bevorzugteste Rest ist. Ein besonders bevorzugter Rest (XIII) sind der Vinylrest, der Propenylrest und der Butenylrest, insbesondere der Vinylrest. Der Rest (XIII) kann auch einen über einen Spacer gebundenen Dienylrest bedeuten, wie den über einen Spacer gebundenen 1,3 Butadienyl- oder den Isoprenylrest.

Besonders bevorzugte organofunktionelle Reste **R²** sind carbonsäurefunktionelle, vinylfunktionelle und epoxyfunktionelle Reste und der Wasserstoff-Rest. Insbesondere der Vinyl- und Wasserstoffrest.

Grundsätzlich ist es denkbar, dass die Siliconharze (i) verschiedene organofunktionelle Gruppen tragen. Allerdings ist dies nur möglich, wenn die gewählten organischen Gruppen nicht miteinander unter den Bedingungen der regulären Lagerung, d.h. eine Aufbewahrung für 6 Monate bei 23°C, 1013 mbar im luft- und feuchtigkeitsdicht verschlossenen Gebinde, miteinander reagieren. Beispielsweise sind Kombinationen von Vinylgruppen und Si-H-Gruppen möglich, da diese zu ihrer Reaktion miteinander deutlich andere Bedingungen als die der regulären Lagerung benötigen, beispielsweise einen Katalysator und erhöhte Temperatur. Eine geeignete Auswahl von Kombinationen funktioneller Gruppen kann sich der Fachmann einfach aus der veröffentlichen Literatur zur chemischen Reaktivität organofunktioneller Gruppen herleiten.

Eine besonders bevorzugte Kombination verschiedener organofunktioneller Gruppen ist die aus hydridischem Wasserstoff und olefinisch ungesättigter Gruppe, wobei in der insbesondere bevorzugten Form davon die olefinisch ungesättigte Gruppe direkt siliziumgebunden ist. Die bevorzugteste olefinisch ungesättigte Gruppe ist die Vinylgruppe.

Sind mehrere Reste **R¹** oder **R²** in einer Einheit der Formel (Ic) vorhanden können diese unabhängig voneinander für verschiedene Reste innerhalb der angegebenen Gruppe von möglichen Resten stehen, wobei die vorgenannten Bedingungen für die organofunktionellen Gruppen beachtet werden müssen.

**R¹⁷** hat die Bedeutung von **R¹** oder kann eine -OH sein. Bevorzugte Kohlenwasserstoffreste R¹ sind unsubstituierte Kohlenwasserstoffreste mit 1 bis 16 Kohlenstoffatomen. Ausgewählte Beispiele für Kohlenwasserstoffreste Reste R¹ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neoPentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie Tolylreste, Xylylreste und Ethylphenylreste, und Aralkylreste, wie der Benzylrest und der β-Phenylethylrest. Besonders bevorzugte Kohlenwasserstoffreste **R¹** sind der Methyl-, der n-Propyl- und der Phenylrest.

Die pulverförmigen Füllstoffe sind vorzugsweise feinteiliges Granulat, das aus vielen kleinen, festen Partikeln wie Körnern oder Kugeln besteht. Die durchschnittliche Korngröße der pulverförmigen Füllstoffe beträgt vorzugsweise 0,1 µm bis 0,3 mm, besonders bevorzugt 0,5 µm bis 100 µm, insbesondere 2 µm bis 20 µm.

Beispiele für pulverförmige Füllstoffe sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen-, oder Zinkoxide bzw. deren Mischoxide, Bariumsulfat, Calciumcarbonat, Gips, Siliciumnitrid, Siliciumcarbid, Bornitrid, Glas- und Kunststoffpulver; verstärkende Füllstoffe, also Füllstoffe mit einer BET-Oberfläche von mindestens 50 m²/g, wie pyrogen hergestellte Kieselsäure, gefällte Kieselsäure, Ruß, wie Furnace- und Acetylenruß und Silicium-Aluminium-Mischoxide großer BET-Oberfläche. Die genannten Füllstoffe können hydrophobiert sein, beispielsweise durch die Behandlung mit Organosilanen bzw. - siloxanen oder durch Verätherung von Hydroxylgruppen zu Alkoxygruppen. Es kann eine Art von pulverförmigem Füllstoff, es kann auch ein Gemisch von mindestens zwei pulverförmigen Füllstoffen eingesetzt werden.

Der pulverförmige Füllstoff kann auch ein Pigment sein, wie Erdpigmente, z.B. Kreide, Ocker, Umbra, Grünerde, Mineralpigmente, wie Titandioxid, Chromgelb, Mennige, Zinkgelb, Zinkgrün, Cadmiumrot, Kobaltblau, organische Pigmente, wie Sepia, Kasseler Braun, Indigo, Azo-Pigmente, Antrachinoide-, Indigoide-, Dioxazin-, Chinacridon-, Phthalocyanin-, Isoindolinon- und Alkaliblau-Pigmente, wobei viele der anorganischen Pigmente auch als Füllstoffe fungieren und umgekehrt.

Die faserförmigen Füllstoffe bestehen vorzugsweise aus Partikeln, bei denen das durchschnittliche Verhältnis von Länge zu Durchmesser vorzugsweise mindestens 5:1, besonders bevorzugt mindestens 8:1, insbesondere mindestens 12:1 und vorzugsweise höchstens 10 000:1, besonders bevorzugt höchstens 1000:1 beträgt.

Beispiele für faserförmige Füllstoffe sind Naturfasern, wie Pflanzenfasern, z.B. Baumwoll-, Bambus-, Brennessel-, Hanf- oder Leinenfasern, Tierfasern, z.B. Woll-, Alpaka-, Kamelhaar-, Kaschmir-, Seide- oder Mohairfasern und Mineralfasern, z.B. Asbest, Erionit, Attapulgit, Sepiolith und Wollastonit.

Weitere Beispiele für faserförmige Füllstoffe sind Chemiefasern, wie Fasern aus natürlichen Polymeren, z.B. Fasern aus regenerierter Cellulose, wie Viskose, Modal, z.B. Fasern aus Celluloseestern, wie Acetat und Triacetat, z.B. Proteinfasern, wie Proteinfasern aus regeneriertem natürlichen Eiweiß pflanzlicher oder tierischer Herkunft, modifizierte Sojabohnenproteinfaser und Caseinfasern, z.B. Polylactid, Alginat und Chitin; Fasern aus synthetischen Polymeren, wie Polyester, Polyamid, Polyimid, Polyamidimid, Aramid, Polyacryl, PTFE, Polyethylen, Polypropylen, Melamin und Polystyrol; Fasern aus anorganischen Stoffen, wie Keramik-, Glas-, Quarz-, Kohlenstoff-, Metallfasern.

Die Siliconharzzusammensetzung (S) kann Hydrosilylierungskatalysator enthalten. Dazu können alle bekannten Katalysatoren eingesetzt werden, welche die bei der Vernetzung von additionsvernetzenden Siliconzusammensetzungen ablaufenden Hydrosilylierungsreaktionen katalysieren.

Der Hydrosilylierungskatalysator der vorzugsweise ausgewählt wird aus Metallen und deren Verbindungen, wie Platin, Rhodium, Palladium, Ruthenium und Iridium, vorzugsweise Platin. Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl₂·olefin) ₂ und H(PtCl₃·olefin) verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclo-hepten, eingesetzt werden. Weitere lösliche Platin-Katalysato-ren sind der Platin-Cyclopropan-Komplex der Formel (PtCl₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Besonders bevorzugt sind Komplexe des Platins mit Vinylsiloxanen, wie sym-Divinyltetramethyldisiloxan.

Der Hydrosilylierungskatalysator kann in jeder beliebigen Form eingesetzt werden, beispielsweise auch in Form von Hydrosilylierungskatalysator enthaltenden Mikrokapseln, oder Polyorganosiloxanpartikeln.

Der Gehalt an Hydrosilylierungskatalysatoren wird vorzugsweise so gewählt, dass die Siliconharzzusammensetzung (S) einen Pt-Gehalt von 0,1-200 Gew.-ppm, bevorzugt von 0,5-40 Gew.-ppm besitzt.

Die Siliconharzzusammensetzung (S) kann Peroxid als Vernetzter enthalten. Beispiele sind Dibenzoylperoxid, Bis-(2,4-dichlorbenzoyl)-peroxid, Dicumylperoxid und 2,5-Bis-(tert.-butylperoxy)-2,5-dimethylhexan sowie deren Gemische, wobei Bis-(2,4-dichlorbenzoyl)-peroxid und 2,5-Bis-(tert.-butylperoxy)-2,5-dimethylhexan bevorzugt sind.

Der Gehalt an Peroxid wird vorzugsweise so gewählt, dass die Siliconharzzusammensetzung (S) einen Peroxidgehalt von 0,1 bis 5 Gew.-%, bevorzugt von 0,5-2 Gew.-% besitzt.

Die Siliconharzzusammensetzung kann rein über Hydrosilylierungskatalysator katalysiert, peroxidisch oder mit einer Kombination aus Hydrosilylierungskatalysator und Peroxid vernetzt werden. Bei einer Kombination aus Hydrosilylierungskatalysator und Peroxid wird beispielsweise bei einer niederigeren Temperatur von beispielsweise 100 °C bis 150 °C mit Hydrosilylierungskatalysator vorvernetzt und mit Epoxid bei einer höheren Temperatur, beispielsweise 160 °C bis 210 °C nachgehärtet oder nur bei einer einzigen Temperatur von beispielsweise 150 °C bis 200 °C ausgehärtet ohne vorzuhärten.

Die Siliconharzzusammensetzung (S) kann weitere Bestandteile enthalten, wie Weichmacher, Haftvermittler, lösliche Farbstoffe, anorganische und organische Pigmente, Fluoreszenzfarbstoffe, Lösungsmittel wie bereits weiter oben ausgeführt, Fungicide, Duftstoffe, Dispergierhilfsmittel, rheologische Additive, Korrosionsinhibitoren, Oxidationsinhibitoren, Lichtschutzmittel, Hitzestabilisatoren, flammabweisend machende Mittel, Mittel zur Beeinflussung der elektrischen Eigenschaften und Mittel zur Verbesserung der Wärmeleitfähigkeit.

Beispiele für einsetzbare Lösungsmittel sind Ether, insbesondere aliphatische Ether, wie Dimethylether, Diethylether, Methyl-t-butylether, Diisopropylether, Dioxan oder Tetrahydrofuran, Ester, insbesondere aliphatische Ester, wie Ethylacetat oder Butylacetat, Ketone, insbesondere aliphatische Ketone, wie Aceton oder Methylethylketon, sterisch gehinderte Alkohole, insbesondere aliphatische Alkohole, wie i-Propanol, t-Butanol, Amide wie DMF, aromatische Kohlenwasserstoffe wie Toluol oder Xylol, aliphatische Kohlenwasserstoffe wie Pentan, Cyclopentan, Hexan, Cyclohexan, Heptan, Chlorkohlenwasserstoffe wie Methylenchlorid oder Chloroform.

Lösungsmittel oder Lösungsmittelgemische mit einem Siedepunkt bzw. Siedebereich von bis zu 120° C bei 0,1 MPa sind bevorzugt.

Bevorzugt handelt es sich bei den Lösungsmitteln um aromatische oder aliphatische Kohlenwasserstoffe.

Die Vernetzung der Siliconharze (i) in der Siliconharzzusammensetzung (S) erfolgt durch Hydrosilylierungskatalysator oder durch Peroxide und kann je nach Auswahl der vorhandenen organofunktionellen Gruppen zusätzlich durch weitere Reaktionen wie Kondensationsreaktionen oder Polymerisationsreaktionen erfolgen.

Die Siliconharzzusammensetzung (S) ist besonders geeignet zur Herstellung von harten festen Produkten, wie Formkörpern, z.B. elektronische Bauteile und Vergussformen, flächigen Gebilden, wie Beschichtungen, Füllmassen zum Verfüllen von Hohlräumen oder dergleichen.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 101,3 kPa (abs.) und alle Temperaturen 20°C.

### Testmethoden:

### Molekülzusammensetzungen:

Die Molekülzusammensetzungen werden mittels Kernresonanzspektroskopie bestimmt (zu Begrifflichkeiten siehe ASTM E 386: Hochauflösende magnetische Kernresonanzspektroskopie (NMR): Begriffe und Symbole), wobei der ¹H-Kern vermessen wird.

### Beschreibung ¹H-NMR Messung

| | |
|---|---|
| Solvent: | CDCl₃, 99,8%-D |
| Probenkonzentration: | 50 mg / 1 ml CDCl₃ in 5 mm NMR-Röhrchen |

Messung ohne Zugabe von TMS, Spektrenreferenzierung von Rest-CHCl₃ in CDCl₃ auf 7,24 ppm

| | |
|---|---|
| Spektrometer: | Bruker Avance I 500 oder Bruker Avance HD 500 |
| Probenkopf: | 5 mm BBO-Probenkopf oder SMART-Probenkopf (Bruker) |

Messparameter:
Pulprog = zg30
TD = 64k
NS = 64 bzw. 128 (abhängig von der Empfindlichkeit des Probenkopfes)
SW = 20,6 ppm
AQ = 3,17 s
D1 = 5 s
SFO1 = 500,13 MHz
O1 = 6,175 ppm

Processing-Parameter:
SI = 32k
WDW = EM
LB = 0,3 Hz

Je nach verwendetem Spektrometertyp sind eventuell individuelle Anpassungen der Messparameter erforderlich.

### Beschreibung 29Si-NMR Messung

| | |
|---|---|
| Solvent: | C6D6 99,8%D/CC14 1:1 v/v mit 1Gew-% Cr(acac)3 als Relaxationsreagenz |
| Probenkonzentration: | ca. 2 g / 1,5 ml Solvent in 10 mm NMR-Röhrchen |
| Spektrometer: | Bruker Avance 300 |
| Probenkopf: | 10 mm 1H/13C/15N/29Si glasfreier QNP-Probenkopf (Fa. Bruker) |

Messparameter:
Pulprog = zgig60
TD = 64k
NS = 1024 (abhängig von der Empfindlichkeit des Probenkopfes)
SW = 200 ppm
AQ = 2,75 s
D1 = 4 s
SFO1 = 300,13 MHz
O1 = -50 ppm

Processing-Parameter:
SI = 64k
WDW = EM
LB = 0,3 Hz

Je nach verwendetem Spektrometertyp sind eventuell individuelle Anpassungen der Messparameter erforderlich.

### Bestimmung der Viskosität:

Die Viskositäten werden, wenn nicht anders angegeben, an einem Rheometer MCR302 der Fa. Anton Paar, D-Ostfildern gemäß DIN EN ISO 3219 in Rotation mit einem Kegel-Platte Messsystem bestimmt. Die Messungen erfolgen im newtonschen Bereich der Proben. Bei nicht-newtonschem Verhalten der Probe wird die Scherrate mit angegeben. Falls nicht anders angegeben, gelten alle Viskositätsangaben bei 25°C und Normaldruck von 1013 mbar.

### Bestimmung der Biegefestigkeit:

Die Biegefestigkeit wird gemäß ISO 178 mit einem Texture Analyzer TA.HD.Plus der Fa. Stable Micro Systems bestimmt. Prüfstäbe mit den Abmessungen (80 × 10 × 4) mm³ werden auf zwei Auflagern gelagert und mit einem beweglichen Stempel beaufschlagt. Zur Herstellung der Prüfstäbe wird der Siliconharz-Verbundstoff für 10 min bei 165°C gepresst und die dabei gefertigten Prüfstäbe nach Entformung anschließend über 24 h bei 200°C getempert.

### Bestimmung der Zugfestigkeit:

Die Zugfestigkeit wird gemäß ISO 527-2 mit einem Texture Analyzer TA.HD.Plus der Fa. Stable Micro Systems an Prüfstäben des Typs 1B bestimmt. Zur Herstellung der Prüfstäbe werden Platten der Dicke von (4 ± 0,2) mm aus Siliconharz-Verbundstoff für 10 min bei 165°C gepresst und nach Entformung über 24 h bei 200°C getempert. Aus diesen Platten werden die Prüfstäbe ausgefräst.

### Beispiele:

### Beispiel 1:

In 33,56 Gew.-Teile eines selbstvernetzendes vinyl- und Si-H-funktionelles Methylphenyl Harz, zusammengesetzt aus 46 mol-% TPh-Einheiten (TPh = (C₆H₅)SiO_{3/2}), 27 mol-% MH-Einheiten (MH = H(CH₃)₂ SiO_{1/2}) und 27 mol-% VM-Einheiten (VM = (C₂H₃) (CH₃)₂ SiO_{1/2}), das zusätzlich 160 Gew.-ppm OH-Einheiten statistisch verteilt an TPh-Einheiten gebunden enthält, so dass sich ein Gehalt an Si-Vinyl von 2,64 mmol/g und von Si-H von 2,61 mmol/g ergibt, werden die Füllstoffe homogen eingemischt. Dazu werden 0,84 Gew.-Teile 2,5-(tert-Butylperoxy)-2,5-dimethylhexan und 0,42 Gew.-Teile eines Platinkatalysators eingemischt und zuerst bei 135 °C verpresst. Nach weiteren 24h Lagerung bei 200 °C ist das Material vollständig ausgehärtet.

### Beispiel 2:

In 33,64 Gew.-Teile eines selbstvernetzendes vinyl- und Si-H-funktionelles Methylphenyl Harz, zusammengesetzt aus 46 mol-% TPh-Einheiten (TPh = (C₆H₅)SiO_{3/2}) , 27 mol-% MH-Einheiten (MH = H(CH₃)₂ SiO_{1/2}) und 27 mol-% VM-Einheiten (VM = (C₂H₃) (CH₃)₂ SiO_{1/2}), das zusätzlich 160 Gew.-ppm OH-Einheiten statistisch verteilt an TPh-Einheiten gebunden enthält, so dass sich ein Gehalt an Si-Vinyl von 2,64 mmol/g und von Si-H von 2,61 mmol/g ergibt, werden die Füllstoffe homogen eingemischt. Dazu wird 1 Gew.-Teil 2,5-(tert-Butylperoxy)-2,5-dimethylhexan eingemischt und bei 165 °C verpresst. Nach weiteren 24h Lagerung bei 200 °C ist das Material vollständig ausgehärtet.

### Beispiel 3:

In 33,82 Gew.-Teile eines selbstvernetzendes vinyl- und Si-H-funktionelles Methylphenyl Harz, zusammengesetzt aus 46 mol-% TPh-Einheiten (TPh = (C₆H₅)SiO_{3/2}), 27 mol-% MH-Einheiten (MH = H(CH₃)₂ SiO_{1/2}) und 27 mol-% VM-Einheiten (VM = (C₂H₃) (CH₃)₂ SiO_{1/2}), das zusätzlich 160 Gew.-ppm OH-Einheiten statistisch verteilt an TPh-Einheiten gebunden enthält, so dass sich ein Gehalt an Si-Vinyl von 2,64 mmol/g und von Si-H von 2,61 mmol/g ergibt, werden die Füllstoffe homogen eingemischt. Dazu wird 0,5 Gew.-Teile eines Platinkatalysators eingemischt und bei 135 °C verpresst. Nach weiteren 24h Lagerung bei 200 °C ist das Material vollständig ausgehärtet.

### Beispiel 4 nicht erfindungsgemäß

Es wird nach Beispiel 2 gearbeitet, jedoch ohne die Zugabe von Füllstoffen. Vernetztes Harz ohne verstärkende Füllstoffe zeigt nach einer 15 minütigen Vernetzung bei 165°C geringe mechanische Festigkeit, die sich durch Temperung etwas verbessern lässt. Die Biegefestigkeit des vernetzten Harzes vor dem Tempern beträgt nur 1 MPa, die Zugfestigkeit weniger als 1 N/mm⁻². Durch Tempern steigt die mechanische Festigkeit an. Es werden nach einer Temperung über 24 h bei 200°C Werte von 8 MPa für die Biegefestigkeit und 6 N/mm⁻² für die Zugfestigkeit erzielt. Dennoch ist das Harz nicht für die Herstellung von Formteilen verwendbar, weil es spröde ist.

### Beispiel 5 nicht erfindungsgemäß

Es wird nach Beispiel 2 gearbeitet. Die in Gießharzen übliche Mischung des Bindemittels mit Quarz führt erwartungsgemäß zur Verbesserung der mechanischen Eigenschaften. So ergibt sich für die Mischung aus 40 Teilen des beschriebenen Siliconharzes mit 65 Teilen Quarz der Type SIKRON SF 4000 (Cristobalit, durchschnittliche Korngröße 5 µm) nach Temperung über 24 h bei 200°C eine Biegefestigkeit von 25 MPa und eine Zugfestigkeit von 19 N/mm⁻² erreicht.

### Beispiel 6 nicht erfindungsgemäß

Es wird nach Beispiel 2 gearbeitet. Die versuchsweise Einarbeitung von bis zu 65 Teilen gemahlener Kurzglasfasern (LANXESS MF 7986 mit Durchmesser 16 µm, durchschnittliche Faserlänge 220 µm, E-Glass (DIN 1259)) in das Siliconharz-Bindemittel führt immer zur Bildung eines teilweise filzartigen, hochviskosen, inhomogenen, nicht verarbeitungsfähigen Gemischs. Nach kurzer Standzeit der Mischung und besonders nach dem Schütteln separiert sich das Bindemittel von den Fasern. Im Ergebnis der versuchsweisen Vernetzung zeigt sich, dass es nicht möglich ist, Formteile mit homogener Faser-Bindemittel-Verteilung herzustellen.

### Beispiel 7 erfindungsgemäß

Es wird nach Beispiel 2 gearbeitet. Es werden eine Mischung aus 25 Teilen Kurzglasfasern, 25 Teilen Quarz, und 15 Teilen hochdisperer Kieselsäure (Wacker HDK H 2000) in das Siliconharz als Bindemittel eingearbeitet und die Mischung vernetzt und getempert über 24 h bei 200°C. Man erreicht eine Biegefestigkeit > 50 MPa und Zugfestigkeit > 25 N/mm⁻².

Durch zusätzliche Zugabe von Quarzmehl zum Glasfaser-Bindemittel-Gemisch analog Beispiel 6 erhält man überraschender Weise eine nicht mehr filzartige, nicht mehr zur Separierung des Bindemittels neigende Mischung mit niedrigerer Viskosität als vor der Zugabe des Quarzmehles, die sich gut verarbeiten lässt und mit der die Herstellung homogener Formkörper möglich ist. Die mechanischen Eigenschaften zeigen sich im Vergleich zur alleinigen Verwendung von Quarz weiter verbessert.

In dem Gemisch aus Siliconharz-Bindemittel, Glasfasern und Quarz wirkt sich - entgegen der Erwartung - sogar die Zugabe von hochdisperser Kieselsäure weiter verbessernd auf das Erscheinungsbild (keine Separierung), die Verarbeitbarkeit und die mechanischen Eigenschaften aus.

## Patentansprüche

1. Siliconharzzusammensetzung (S),
die Siliconharz (i) aus Einheiten der allgemeinen Formeln (Ia), (Ib), (Ic) und (Id) 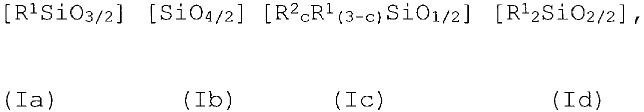
enthält, wobei
**R¹** gleiche oder unabhängig voneinander verschiedene einwertige Kohlenwasserstoffreste oder -OH,
**R²** gleiche oder unabhängig voneinander verschiedene einwertige organofunktionelle Kohlenwasserstoffreste, olefinisch ungesättigte Kohlenwasserstoffreste oder einen Wasserstoffrest bedeutet, wobei der Rest **R²** über ein Kohlenstoffatom an das Siliziumatom gebunden ist, und wenn **R²** eine Wasserstoffrest bedeutet, dieser direkt an das Siliziumatom gebunden ist,
**c** die Werte 0 oder 1 bedeuten,
mit den Maßgaben, dass
- mindestens 5 mol-% der Einheiten (Ic) enthalten sind,
- mindestens 20 mol-% der Einheiten (Ia) enthalten sind,
- höchstens 20 mol-% der Einheiten (Ib) enthalten sind,
- höchstens 20 mol-% der Einheiten (Id) enthalten sind,
- mindestens 1 mol-% der Einheiten (Ic) einen Rest **R²** aufweisen, der Wasserstoffrest bedeutet,
- und mindestens 1 mol-% der Einheiten Ic einen Rest **R²** aufweisen, der olefinisch ungesättigten Kohlenwasserstoffrest bedeutet,
und sowohl pulverförmige Füllstoffe als auch faserförmige Füllstoffe enthält.

2. Siliconharzzusammensetzung (S) nach Anspruch 1, bei der im Siliconharz (i) in den Einheiten der allgemeinen Formel (Ic) das Verhältnis Rest **R²**, der olefinisch ungesättigten Kohlenwasserstoffrest bedeutet : Rest **R²**, der Wasserstoffrest bedeutet, 3:1 bis 1:2 beträgt.

3. Siliconzusammensetzung (S) nach einem oder mehreren der vorangehenden Ansprüche, bei der die pulverförmigen Füllstoffe eine durchschnittliche Korngröße von 0,1 µm bis 0,3 mm aufweisen.

4. Siliconzusammensetzung (S) nach einem oder mehreren der vorangehenden Ansprüche, bei der die pulverförmigen Füllstoffe ausgewählt werden aus Füllstoffen mit einer BET-Oberfläche von bis zu 50 m²/g und Füllstoffen mit einer BET-Oberfläche von mindestens 50 m²/g.

5. Siliconzusammensetzung (S) nach einem oder mehreren der vorangehenden Ansprüche, bei der die faserförmigen Füllstoffe aus Partikeln bestehen, bei denen das durchschnittliche Verhältnis von Länge zu Durchmesser mindestens 5:1 beträgt.

6. Siliconzusammensetzung (S) nach einem oder mehreren der vorangehenden Ansprüche, bei der die faserförmigen Füllstoffe ausgewählt werden aus Naturfasern, Chemiefasern und Fasern aus anorganischen Stoffen.

7. Siliconzusammensetzung (S) nach einem oder mehreren der vorangehenden Ansprüche, welche Hydrosilylierungskatalysator enthalten, der ausgewählt wird aus Metallen und deren Verbindungen von Platin, Rhodium, Palladium, Ruthenium und Iridium.

8. Siliconzusammensetzung (S) nach einem oder mehreren der vorangehenden Ansprüche, welche Peroxid als Vernetzter enthalten.

9. Feste Produkte, hergestellt aus den Siliconzusammensetzungen (S) gemäß einem oder mehreren der vorangehenden Ansprüche.

## Claims

1. Silicone resin composition (S)
that comprises silicone resin (i) consisting of units of the general formulae (Ia), (Ib), (Ic) and (Id) 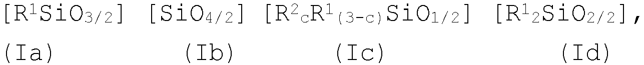
where
**R¹** are identical or independently different monovalent hydrocarbon radicals or -OH,
**R²** are identical or independently different monovalent organofunctional hydrocarbon radicals, olefinically unsaturated hydrocarbon radicals or a hydrogen radical, where the radical **R²** is bonded to the silicon atom via a carbon atom, and when **R²** is a hydrogen radical, this is bonded to the silicon atom directly,
**c** has the value 0 or 1,
with the provisos that
- units (Ic) are present in a content of not less than 5 mol%,
- units (Ia) are present in a content of not less than 20 mol%,
- units (Ib) are present in a content of not more than 20 mol%,
- units (Id) are present in a content of not more than 20 mol%,
- not less than 1 mol% of the units (Ic) contain a radical **R²** that is a hydrogen radical,
- and not less than 1 mol% of the units (Ic) contain a radical **R²** that is an olefinically unsaturated hydrocarbon radical,
and also comprises both pulverulent fillers and fibrous fillers.

2. Silicone resin composition (S) according to Claim 1 in which, in the silicone resin (i), the ratio of units of the general formula (Ic) in which the radical **R²** is an olefinically unsaturated hydrocarbon radical to units in which the radical **R²** is a hydrogen radical is 3:1 to 1:2.

3. Silicone composition (S) according to one or both of the preceding claims, in which the pulverulent fillers have an average particle size from 0.1 µm to 0.3 mm.

4. Silicone composition (S) according to one or more of the preceding claims, in which the pulverulent fillers are selected from fillers having a BET surface area of up to 50 m²/g and fillers having a BET surface area of not less than 50 m²/g.

5. Silicone composition (S) according to one or more of the preceding claims, in which the fibrous fillers consist of particles in which the average ratio of length to diameter is not less than 5:1.

6. Silicone composition (S) according to one or more of the preceding claims, in which the fibrous fillers are selected from natural fibres, man-made fibres and fibres from inorganic substances.

7. Silicone composition (S) according to one or more of the preceding claims, which comprises hydrosilylation catalyst selected from the metals platinum, rhodium, palladium, ruthenium and iridium and compounds thereof.

8. Silicone composition (S) according to one or more of the preceding claims, which comprises peroxide as crosslinker.

9. Solid products produced from the silicone compositions (S) according to one or more of the preceding claims.

## Revendications

1. Composition de résine de silicone (S),
qui contient une résine de silicone (i) constituée de motifs de formules générales (Ia), (Ib), (Ic) et (Id) 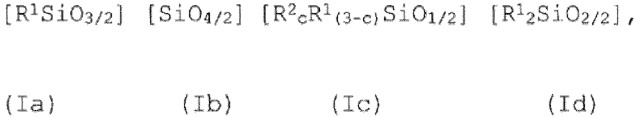
dans lesquelles
**R¹** représente des radicaux hydrocarbonés monovalents identiques ou différents les uns des autres ou -OH,
**R²** représente des radicaux hydrocarbonés organofonctionnels monovalents identiques ou différents les uns des autres, des radicaux hydrocarbonés à insaturation oléfinique ou un radical hydrogène, le radical **R²** étant lié à l'atome de silicium par l'intermédiaire d'un atome de carbone et, lorsque **R²** représente un radical hydrogène, ce dernier étant directement lié à l'atome de silicium,
**c** représente les valeurs 0 ou 1,
à la condition que
- au moins 5 % en moles des motifs (Ic) soient présents,
- au moins 20 % en moles des motifs (Ia) soient présents,
- au plus 20 % en moles des motifs (Ib) soient présents,
- au plus 20 % en moles des motifs (Id) soient présents,
- au moins 1 % en moles des motifs (Ic) comprennent un radical **R²** représentant l'atome d'hydrogène,
- et au moins 1 % en moles des motifs (Ic) comprennent un radical **R²**, qui représente un radical hydrocarboné à insaturation oléfinique,
et contient des charges, tant pulvérulentes que fibreuses.

2. Composition de résine de silicone (S) selon la revendication 1, dans laquelle, dans la résine de silicone (i), dans les motifs de Formule générale (Ic), le rapport entre le radical **R²** qui représente un radical hydrocarboné à insaturation oléfinique et le radical **R²** qui représente un radical hydrogène, est de 3:1 à 1:2.

3. Composition de silicone (S) selon l'une ou plusieurs des revendications précédentes, dans laquelle les charges pulvérulentes présentent une granulométrie moyenne de 0,1 µm à 0,3 mm.

4. Composition de silicone (S) selon l'une ou plusieurs des revendications précédentes, dans laquelle les charges pulvérulentes sont choisies parmi les charges ayant une aire BET allant jusqu'à 50 m²/g et les charges ayant une aire BET d'au moins 50 m²/g.

5. Composition de silicone (S) selon l'une ou plusieurs des revendications précédentes, dans laquelle les charges fibreuses sont constituées de particules dans lesquelles le rapport moyen de la longueur au diamètre est d'au moins 5:1.

6. Composition de silicone (S) selon l'une ou plusieurs des revendications précédentes, dans laquelle les charges fibreuses sont choisies parmi les fibres naturelles, les fibres chimiques et les fibres de matières inorganiques.

7. Composition de silicone (S) selon l'une ou plusieurs des revendications précédentes, qui contient un catalyseur d'hydrosilylation, qui est choisi parmi les métaux et leurs composés du platine, du rhodium, du palladium, du ruthénium et de l'iridium.

8. Composition de silicone (S) selon l'une ou plusieurs des revendications précédentes, qui contient un peroxyde en tant qu'agent de réticulation.

9. Produits solides fabriqués à partir de compositions de silicone (S) selon l'une ou plusieurs des revendications précédentes.
